# EUROPÄISCHE PATENTSCHRIFT

(11) **EP 3 294 627 B1**
(45) Veröffentlichungstag und Bekanntmachung des Hinweises auf die Patenterteilung: **26.06.2019**
(21) Anmeldenummer: 16721424.6
(22) Anmeldetag: 06.05.2016
(51) Int. Cl.: B64D 23/00, A63G 31/00

(54) **BELÜFTUNGSVORRICHTUNG FÜR EINEN GESCHLOSSENEN VERTIKALWINDTUNNEL**
AERATING DEVICE FOR A VERTICAL WIND TUNNEL
DISPOSITIF D'AÉRATION POUR UNE SOUFFLERIE VERTICALE

(30) Priorität: 08.05.2015 DE 102015107227
(43) Veröffentlichungstag der Anmeldung: 21.03.2018
(73) Patentinhaber: Jochen Schweizer Projects Holding GmbH, 82024 Taufkirchen (DE)
(72) Erfinder: LOEWEN, Eduard, 68623 Lampertheim (DE); DENECKEN, Jan, 81671 München (DE)
(74) Vertreter: Prinz & Partner mbB
(86) Internationale Anmeldenummer: PCT/EP2016/060225
(87) Internationale Veröffentlichungsnummer: WO 2016/180735

(56) Entgegenhaltungen:
- DE-A1-102008 046 759
- US-A- 6 083 110
- US-A1- 2004 115 593
- US-A1- 2006 025 227

## Beschreibung

Die Erfindung betrifft eine Belüftungsvorrichtung für einen geschlossenen Vertikalwindtunnel. Die Erfindung betrifft ferner einen Vertikalwindtunnel mit einer im Wesentlichen ringförmigen Luftführung, in der ein Luftstrom rezirkuliert, und einer Belüftungsvorrichtung.

Vertikalwindtunnel sind Windkanäle mit leistungsstarken Gebläsen, die in der Regel als Freifallsimulatoren benutzt werden. Sie verfügen über eine vertikal ausgerichtete Flugkammer, in der eine oder mehrere Personen allein durch die Kraft der vertikal einströmenden Luft schweben können. In solchen Anlagen können Fallschirmspringer trainieren und Freizeitsportler das sogenannte "Bodyflying" betreiben, indem sie sich kontrolliert im Luftstrom bewegen.

Vertikalwindtunnel lassen sich hinsichtlich ihres Luftführungssystems in zwei unterschiedliche Bauarten einteilen: Offene Windtunnel haben eine nach beiden Seiten offene Luftführung, d. h. es wird Luft aus der Umgebung angesaugt, die dann durch die Flugkammer strömt und am oberen Ende der Flugkammer wieder ins Freie ausgestoßen wird. Bei geschlossenen Windtunneln wird die Luft in einer im Wesentlichen ringförmigen Luftführung rezirkuliert, indem die aus der Flugkammer ausströmende Luft wieder dem Gebläse zugeführt wird.

Geschlossene Windtunnel haben den Nachteil, dass sich die Luft innerhalb des Windkanals stark erwärmen kann. Insbesondere außerhalb der Wintermonate ist eine Kühlung eines geschlossenen Windtunnels erforderlich, da sich während der wärmeren Jahreszeiten das Innere des Windtunnels im Betrieb durch die eingebrachte Energie der Gebläseventilatoren stark aufheizt.

Aus der DE 10 2008 046759 A1 ist ein Freifallsimulator mit einem in sich geschlossenem Luftkreislauf bekannt. Zur Temperierung des Luftstroms wird eine Belüftungsvorrichtung vorgeschlagen, die eine Lufteinlassöffnung und eine Luftauslassöffnung zum Austausch von Luft innerhalb des Windkanals aufweist. Die Lufteinlassöffnung, durch die im Betrieb des Freifallsimulators Umgebungsluft zur Kühlung des Luftstroms eintreten kann, befindet sich in einer Seitenwand eines oberen horizontalen Abschnitts des Windkanals zwischen zwei Umlenkbereichen. Die Luftauslassöffnung ist in einem oberen Eckbereich des Windkanals innerhalb einer Umlenkvorrichtung angeordnet, welche, ebenso wie die weiteren Umlenkvorrichtungen, den Luftstrom in den Eckbereichen umlenken. Die Anordnung der Luftauslassöffnung in einem Eckbereich ist bewusst so gewählt, um die auf den Luftstrom wirkenden Fliehkräfte auszunutzen. Es sind keine speziellen Luftauslenkvorrichtungen erforderlich, um einen Teil des Luftstroms aus dem Inneren des Kanals nach außen zu lenken. Die Lufteinlassöffnung und die Luftauslassöffnung können mittels Klappen ganz bzw. teilweise verschlossen werden. Beispielsweise können die Klappen der Lufteinlassöffnung so nach außen verschwenkbar sein, dass sie mit der Außenhülle des Freifallsimulators einen spitzen Winkel ausbilden. Alternativ können Verschiebeklappen vorgesehen sein, die synchron oder voneinander unabhängig gesteuert werden.

Eine Belüftungsvorrichtung für einen geschlossenen Vertikalwindtunnel mit den Merkmalen des Oberbegriffs des Anspruchs 1 ist aus der US 2006/025227 A1 bekannt. In einem vertikalen Rückluftschacht ist ein Luftaustausch-Mechanismus mit einer stromabwärts gerichteten Lufteinlassklappe und einer an der gegenüberliegenden Seiten des Rückluftschachts angebrachten, stromaufwärts gerichteten Luftauslassklappe vorgesehen. Die gegenüberliegend montierten Luftklappen formen eine Düse, die eine Zone mit geringerem statischem Druck stromabwärts des Lufteinlasses erzeugt. Dadurch wird Außenluft angesaugt, ohne dass hierfür ein zusätzlicher Ventilator benötigt wird.

Die US 2004/115593 A1 zeigt einen geschlossenen Freifallsimulator mit mehreren im Wesentlichen vertikalen Rezirkulationssäulen und einer Rezirkulationshaube. Die Rezirkulationshaube umgibt eine im Wesentlichen geschlossene Kammer, die eine Strömungsverbindung zwischen dem oberen Ende der Säule über der Flugkammer und den oberen Enden der Rezirkulationssäulen herstellt. Die Haube ist mit einer Vielzahl von verstellbaren Luftklappen oder Auslassdämpfern versehen. In dem Ausmaß, in dem die Luftklappen geöffnet werden, kann ein Teil der aus der Flugkammer ausgestoßenen Luft entweichen. Die dann für die Strömung durch die Flugkammer zusätzlich benötigte Luft wird durch spezielle, schalldämpfende Lufteinlassschächte angesaugt, die seitlich von den unteren Enden der Rezirkulationssäulen angeordnet sind.

Aus der US 6 083 110 A ist ein Vertikalwindtunnel mit mehreren Rückluftkanälen bekannt, die jeweils im oberen Bereich einen Auslassdämpfer und im unteren Bereich einen Einlassdämpfer aufweisen, um einen Teil des Luftstroms höherer Temperatur mit Umgebungsluft niedrigerer Temperatur auszutauschen. Jedes Dämpferpaar wird so eingestellt, dass die vom Rückluftkanal durch den Auslassdämpfer geblasene Luftmasse durch eine gleiche, durch den Einlassdämpfer eintretende Luftmasse ersetzt wird.

Aufgabe der Erfindung ist es, eine effektivere Art der Belüftung eines Vertikalwindtunnels anzugeben.

Gelöst wird diese Aufgabe durch eine Belüftungsvorrichtung mit den Merkmalen des Anspruchs 1. Vorteilhafte und zweckmäßige Ausgestaltungen der erfindungsgemäßen Vorrichtung sind in den Unteransprüchen angegeben.

Die erfindungsgemäße Belüftungsvorrichtung ist für einen geschlossenen Vertikalwindtunnel vorgesehen, in dem ein Luftstrom in einer im Wesentlichen ringförmigen Luftführung rezirkuliert. Die Belüftungsvorrichtung umfasst einen Lufteinlass mit einer Einlassöffnung, durch die dem Luftstrom des Vertikalwindtunnels Luft aus der Umgebung zugeführt werden kann, und einen Luftauslass mit einer Auslassöffnung, durch die ein Teil der Luft des Luftstroms in die Umgebung abgeführt werden kann. Gemäß der Erfindung umfasst die Belüftungsvorrichtung ferner eine Einrichtung zur Verengung des effektiven Querschnitts der Luftführung im Bereich der Auslassöffnung. Die Einlassöffnung steht in Strömungsverbindung zu einem Bereich der Luftführung, der stromabwärts des verengten Querschnitts der Luftführung liegt.

Die erfindungsgemäße Belüftungsvorrichtung schafft mit einfachen Mitteln einen effektiven Luftaustausch in einem Vertikalwindtunnel, um so die Temperatur des Luftstroms bei Bedarf zu senken. Die erfindungsgemäß vorgesehene Einrichtung zum Verengen des Querschnitts der Luftführung sorgt dafür, dass sich in einem bestimmten Bereich der Luftführung des Vertikalwindtunnels der Druck erhöht. Genau in diesem Bereich ist die Auslassöffnung vorgesehen. Das natürliche Bestreben nach einem Druckausgleich führt dazu, dass der erhöhte Druck automatisch dadurch abgebaut wird, dass ein Teil des Luftstroms durch die Auslassöffnung in die Umgebung abströmt. Da der Luftstrom aufgrund der künstlich erzeugten lokalen Druckerhöhung selbst nach einem Druckausgleich strebt, sind grundsätzlich keine besonderen baulichen Vorkehrungen notwendig, um einen Teil des Luftstroms über die Auslassöffnung gezielt ins Freie abzuführen.

Der abgeführte Teil des warmen Luftstroms soll durch kühlere Frischluft aus der Umgebung ersetzt werden. Dies geschieht bei der erfindungsgemäßen Belüftungsvorrichtung automatisch, indem das Druckgefälle zwischen dem verengten Bereich und dem stromabwärts anschließenden, nicht verengten Bereich der Luftführung ausgenutzt wird. In dem letztgenannten Bereich befindet sich die Einlassöffnung, sodass aufgrund des dort vorherrschenden niedrigeren Drucks Luft aus der Umgebung angesaugt und durch die Einlassöffnung dem Luftstrom zugeführt wird. Dieser Ansaugeffekt entspricht im Wesentlichen dem Wirkprinzip einer Venturi-Düse. Auch die Luftzufuhr kommt somit grundsätzlich ohne besondere bauliche Maßnahmen aus.

Bei einer bevorzugten Ausführungsform der Erfindung sind sowohl die Einlassöffnung als auch die Auslassöffnung in einem oberen horizontalen Abschnitt der Luftführung angeordnet, insbesondere in einem mittleren Teil des oberen horizontalen Abschnitts. Die Anordnung der Ein- und Auslassöffnungen im oberen horizontalen Abschnitt der Luftführung hat den Vorteil, dass etwaige Luftverwirbelungen und strömungsbedingte Geräusche in einem Bereich des Vertikalwindtunnels auftreten, der am weitesten von den Besuchern am Boden der Anlage entfernt ist. Im mittleren Teil des oberen horizontalen Abschnitts, also zwischen zwei Umlenkbereichen der Luftführung, ist der Luftstrom weitestgehend laminar und deshalb gut berechenbar. Dies vereinfacht die Vorhersage der Druckverhältnisse, die bei der Auslegung der Ein- und Auslassöffnung eine wesentliche Rolle spielen.

Im Falle eines im Wesentlichen rechteckigen Querschnitts der Luftführung im Belüftungsbereich ist die Einlassöffnung vorzugsweise in einer vertikalen Seitenwand des oberen horizontalen Abschnitts und die Auslassöffnung vorzugsweise in einer horizontalen Wand des oberen horizontalen Abschnitts gebildet. Da warme Luft nach oben steigt, begünstigt eine Anordnung der Auslassöffnung in einer oberen horizontalen Wand die Luftabfuhr. Grundsätzlich ist aber auch eine andere Anordnung der Ein- und Auslassöffnungen möglich.

Gemäß einer vorteilhaften Gestaltung der erfindungsgemäßen Belüftungsvorrichtung weist der Lufteinlasses einen Einlasskanal auf, der die Einlassöffnung mit einer in die Umgebung mündenden Ansaugöffnung verbindet, und der Luftauslass weist einen Auslasskanal auf, der die Auslassöffnung mit einer in die Umgebung mündenden Ausstoßöffnung verbindet. Von wesentlicher Bedeutung bei dieser Gestaltung ist, dass der Einlasskanal bezüglich der Strömungsrichtung des Luftstroms in eine andere Richtung als der Auslasskanal verläuft, insbesondere in eine entgegengesetzte Richtung. Dadurch ist gewährleistet, dass die warme Luft nicht in der Nähe der Ansaugöffnung ausgestoßen und ausschließlich kühlere Frischluft angesaugt wird.

Zur Vermeidung einer Lärmbelästigung bzw. um diese möglichst gering zu halten, ist es zweckmäßig, den Einlasskanal und/oder den Auslasskanal mit Kulissen-Schalldämpfern auszustatten.

Gemäß der Erfindung umfasst die Einrichtung zur Verengung des effektiven Querschnitts der Luftführung wenigstens eine Leitklappe, die zwischen einer ersten Stellung, in der sie die Einlassöffnung ganz oder großteils verschließt, und einer zweiten Stellung, in der sie die Einlassöffnung freigibt oder einen größeren effektiven Einlassquerschnitt bereitstellt, bewegbar ist. Die Leitklappe ermöglicht somit eine Steuerung der Menge an Frischluft, die dem Luftstrom im Vertikalwindtunnel zugeführt wird. Selbstverständlich können auch Stellungen der Leitklappe zwischen der ersten und zweiten Stellung realisiert werden, um eine gleichmäßigere, "sanftere" Steuerung zu erreichen.

Gemäß der Erfindung ist die Einrichtung zur Verengung des effektiven Querschnitts der Luftführung so gestaltet, dass die Leitklappe in der zweiten Stellung den effektiven Querschnitt der Luftführung im Bereich der Auslassöffnung verengt. Somit dient die Leitklappe sowohl zur Einstellung der zugeführten Frischluftmenge als auch zur gezielten Druckerhöhung im Bereich der Auslassöffnung. Mit nur einer Einrichtung werden also gleichzeitig zwei gewünschte Effekte erzielt, sodass der bauliche Aufwand reduziert ist.

Eine bevorzugte Ausführungsform der Erfindung sieht vor, dass die Leitklappe an einem stromaufwärtigen Ende der Einlassöffnung angebracht und nach innen schwenkbar ist. So wird auf einfache Weise mit nur einer Einrichtung sichergestellt, dass eine stärkere Druckerhöhung und damit eine größere Luftabfuhr automatisch zu einer Vergrößerung des effektiven Einlassquerschnitts und damit zu einer größeren Frischluftzufuhr führt und umgekehrt. Das Schwenken der Leitklappe kann automatisch in Reaktion auf bestimmte Betriebsparameter erfolgen, insbesondere der Temperatur des Luftstroms, oder manuell gesteuert werden.

Die Einlassöffnung kann sich vertikal ganz oder nahezu über die gesamte Höhe des oberen horizontalen Abschnitts erstrecken, und/oder die Auslassöffnung kann sich horizontal ganz oder nahezu über die gesamte Breite des oberen horizontalen Abschnitts erstrecken. Eine solche Auslegung der Einlassöffnung bzw. der Auslassöffnung schafft die Option, innerhalb kurzer Zeit große Luftmengen auszutauschen.

Die erfindungsgemäße Belüftungsvorrichtung sieht vorzugsweise zwei Lufteinlässe an gegenüberliegenden Seiten der Luftführung vor, wobei die beiden Lufteinlässe insbesondere spiegelsymmetrisch ausgebildet und/oder im Wesentlichen baugleich sind. Vor allem bei einer um +/- 90° versetzten Anordnung des Luftauslasses zu einem Lufteinlass sorgt die symmetrische Anordnung des zweiten Lufteinlasses für gleichmäßige Strömungsverhältnisse in der Belüftungsvorrichtung.

Die Erfindung schafft auch einen Vertikalwindtunnel mit einer im Wesentlichen ringförmigen Luftführung, in der ein Luftstrom rezirkuliert. Der erfindungsgemäße Vertikalwindtunnel umfasst eine Belüftungsvorrichtung der oben beschriebenen Art.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine größtenteils transparente perspektivische Ansicht eines Vertikalwindtunnels ohne Belüftungsvorrichtung;
- Figur 2 eine erste perspektivische Ansicht der erfindungsgemäßen Belüftungsvorrichtung an einem Vertikalwindtunnel;
- Figur 3 eine zweite perspektivische Ansicht der erfindungsgemäßen Belüftungsvorrichtung; und
- Figur 4 eine teilweise transparente perspektivische Ansicht der erfindungsgemäßen Belüftungsvorrichtung.

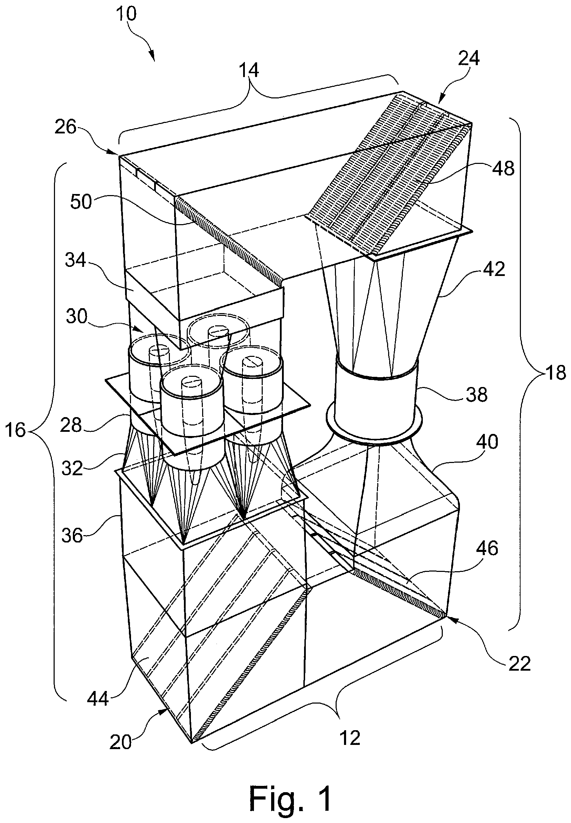

In Figur 1 ist ein geschlossener Vertikalwindtunnel 10 (ohne Außenverkleidung) dargestellt, in dem Luft in einer im Wesentlichen ringförmigen Luftführung rezirkuliert. Die Luftführung kann grob unterteilt werden in einen unteren horizontalen Abschnitt 12, einen oberen horizontalen Abschnitt 14 sowie zwei separate vertikale Abschnitte 16 und 18. Der untere horizontale Abschnitt 12 ist an zwei Eck-oder Umlenkbereichen 20 und 22 mit den beiden vertikalen Abschnitten 16 bzw. 18 verbunden. Ebenso ist der obere horizontale Abschnitt 14 an zwei Eck- oder Umlenkbereichen 24 und 26 mit den beiden vertikalen Abschnitten 16 bzw. 18 verbunden.

Im mittleren Teil des ersten vertikalen Abschnitts 16 befindet sich ein Gebläse 28 mit mehreren nebeneinander angeordneten Ventilatoren in axialer Ausrichtung. Oberhalb des Gebläses 28 ist ein Einlassdiffusor 30 angeordnet, unterhalb ein entsprechend der Anzahl der Ventilatoren unterteilter Auslassdiffusor 32. Ein oberes Diffusorzwischenstück 34 und ein unteres Diffusorzwischenstück 36 verbinden den ersten vertikalen Abschnitt 16 mit dem oberen horizontalen Abschnitt 14 bzw. mit dem unteren horizontalen Abschnitt 12.

Im zweiten vertikalen Abschnitt 18 ist eine Flugkammer 38 angeordnet, in der während des Betriebs des Vertikalwindtunnels 10 eine oder mehrere Personen schweben können. Der Bereich zwischen dem unteren Umlenkbereich 22 und der Flugkammer 38 ist als Düse 40 ausgebildet. Ein weiterer Diffusor 42 verbindet das obere Ende der Flugkammer 34 mit dem Umlenkbereich 26.

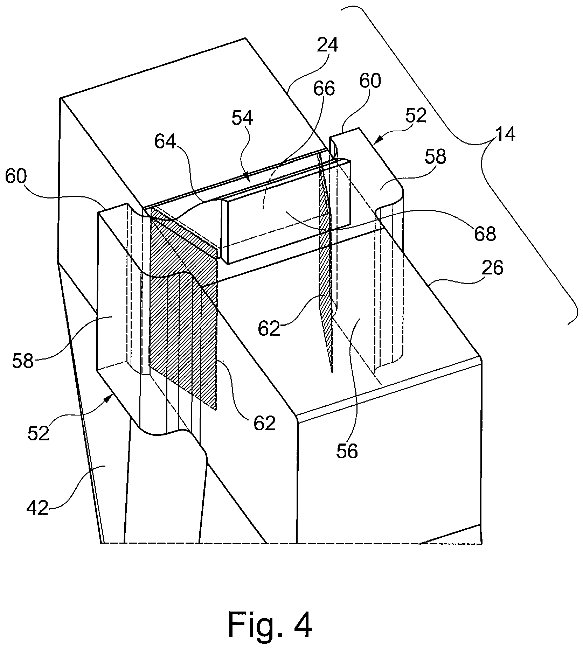

In den vier Umlenkbereichen 20, 22, 24, 26 ist jeweils eine Umlenkvorrichtung 44, 46, 48 bzw. 50 mit einem Lamellenpaket (in Figur 4 nur bei der Umlenkvorrichtung 48 symbolisch dargestellt) angeordnet, die zum Umlenken und "Kämmen" des zirkulierenden Luftstroms vorgesehen sind.

Der durch das Gebläse 28 erzeugte Luftstrom wird in den Auslassdiffusor 32 ausgestoßen und strömt durch das untere Diffusorzwischenstück 36 in den ersten Umlenkbereich 20. Die dortige erste Umlenkvorrichtung lenkt den Luftstrom im Wesentlichen um 90° um in den unteren horizontalen Abschnitt 12. Der Luftstrom gelangt in den zweiten Umlenkbereich 22, wo er durch die zweite Umlenkvorrichtung 46 um im Wesentlichen 90° in die Düse 40 umgelenkt wird. Durch die Düse 40 tritt der verdichtete Luftstrom von unten in die Flugkammer 38 ein. Der Luftstrom tritt oben aus der Flugkammer 38 aus und wird durch den Flugkammer-Diffusor 42 in den dritten Umlenkbereich 24 geführt. Die dritte Umlenkvorrichtung 48 lenkt den Luftstrom in den oberen horizontalen Abschnitt 14. Im vierten Umlenkbereich 26 sorgt die vierte Umlenkvorrichtung 50 dafür, dass der Luftstrom zurück in den ersten vertikalen Abschnitt 16 gelangt. Über das obere Diffusorzwischenstück 34 und den Einlassdiffusor 30 wird der Luftstrom wieder den Ventilatoren des Gebläses 28 zugeführt.

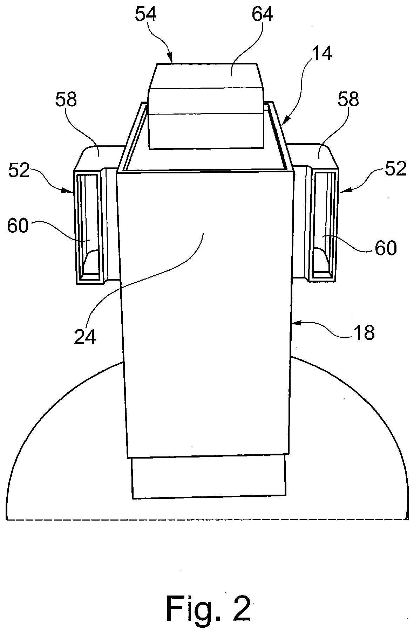

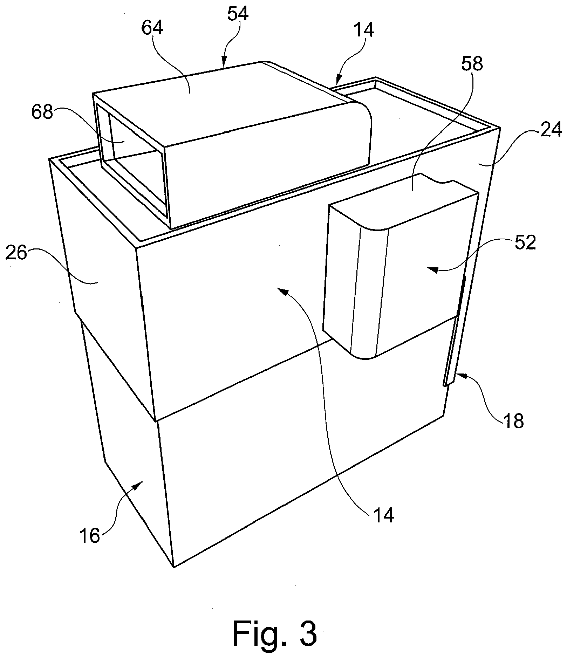

In Figur 1 nicht gezeigt ist eine Belüftungsvorrichtung zur Temperierung des rezirkulierten Luftstroms, die nachfolgend anhand der Figuren 2 bis 4 näher erläutert wird.

Die Belüftungsvorrichtung umfasst zwei Lufteinlässe 52, durch die dem Luftstrom in der Luftführung des Vertikalwindtunnels 10 Luft aus der Umgebung zugeführt werden kann, und einen Luftauslass 54, durch den ein Teil des Luftstroms in die Umgebung abgeführt werden kann. Sowohl die Lufteinlässe 52 als auch der Luftauslass 54 sind im mittleren Teil des oberen horizontalen Abschnitts 14 der Luftführung angeordnet.

Die beiden Lufteinlässe 52 sind spiegelsymmetrisch zueinander und ansonsten im Wesentlichen baugleich. In den beiden gegenüberliegenden vertikalen Seitenwänden des mittleren Teils des oberen horizontalen Abschnitts 14 ist jeweils eine Einlassöffnung 56 gebildet, die in einen gekrümmten Einlasskanal 58 mündet. Der Einlasskanal 58 endet jeweils in einer Ansaugöffnung 60, die bezüglich der Strömungsrichtung des Luftstroms in der Luftführung stromaufwärts der zugehörigen Einlassöffnung 56 liegt. Sowohl die Einlassöffnung 56 als auch die Ansaugöffnung 60 erstrecken sich vertikal fast über die gesamte Höhe des oberen horizontalen Abschnitts 14. Die Einlasskanäle 58 sind aerodynamisch optimiert und mit Kulissen-Schalldämpfern ausgestattet.

Die beiden Einlassöffnungen 56 können jeweils mit einer elektrisch angetriebenen Leitklappe 62 vollständig verschlossen werden. (Zur besseren Kenntlichmachung sind die beiden Leitklappen 62 in Figur 4 schraffiert dargestellt.) Die Leitklappen 62 sind am stromaufwärtigen Ende der Einlassöffnungen 56 angebracht und nach innen, d. h. in das Innere des oberen horizontalen Abschnitts 14, schwenkbar. In Figur 4 sind die Leitklappen in einer maximalen Schwenkstellung gezeigt. Mittels einer Steuerung können neben der Schließstellung, in der die Leitklappen 62 an den Innenseiten der oberen Luftführung anliegen, und der maximalen Schwenkstellung auch Zwischenstellungen eingestellt werden, entweder manuell oder automatisch nach bestimmten Vorgaben.

Der Luftauslass 54 umfasst einen Auslasskanal 64, der eine in der oberen Wand des mittleren Teils des oberen horizontalen Abschnitts 14 gebildete Auslassöffnung 66 mit einer Ausstoßöffnung 68 verbindet, die bezüglich der Strömungsrichtung des Luftstroms in der Luftführung stromabwärts der Auslassöffnung 66 liegt. Die Auslassöffnung 66 befindet sich in der oberen horizontalen Wand des oberen horizontalen Abschnitts 14 in einem Bereich über den Leitklappen 62. Die stromabwärts gelegene Ausstoßöffnung 68 ist senkrecht zur Auslassöffnung 66 und parallel zu den Einlassöffnungen 56 orientiert und erstreckt sich horizontal fast über die gesamte Breite des oberen horizontalen Abschnitts 14. Ebenso wie die Einlasskanäle 58 ist auch der Auslasskanal 64 aerodynamisch optimiert und mit Kulissen-Schalldämpfern ausgestattet.

Im Folgenden wird die Funktionsweise der Belüftungsvorrichtung beschrieben, die zur Steuerung der Temperatur des Vertikalwindtunnels 10, insbesondere zur Kühlung des in der Luftführung zirkulierenden Luftstroms dient.

Bei Kühlungsbedarf werden die Leitklappen 62 nach innen geschwenkt, wie in Figur 4 gezeigt. Dies führt zu einer effektiven Verengung der Luftführung im mittleren Teil des oberen horizontalen Abschnitts 14. Der Luftstrom, der von unten aus der Flugkammer 38 durch die dritte Umlenkvorrichtung 48 umgelenkt und horizontal in Richtung der vierten Umlenkvorrichtung 50 strömt, wird durch die verschwenkten Leitklappen 62 verdichtet, was zu einer Druckerhöhung im Bereich vor den freien Enden der Leitklappen 62 führt. Die in diesem Bereich der Luftführung angeordnete Auslassöffnung 66 ermöglicht es, die Druckerhöhung auszugleichen, indem ein Teil des Luftstroms durch den Auslasskanal 64 in die Umgebung entweicht.

In dem stromabwärts hinter den Leitklappen 62 anschließenden Bereich der Luftführung, wo der Strömungsquerschnitt nicht mehr verengt ist, herrscht ein geringerer Druck. Dieser Unterdruck führt dazu, dass Luft aus der Umgebung durch den Einlasskanal 58, der dank der verschwenkten Leitklappen 62 mit der Luftführung in Strömungsverbindung steht, angesaugt wird. Dieser Ansaugeffekt ist vergleichbar mit dem Wirkprinzip einer Venturi-Düse.

Obwohl der Lufteinlass 52 und der Luftauslass 54 im selben Teil des oberen horizontalen Abschnitts 14 der Luftführung angeordnet sind, ist immer sichergestellt, dass dem Luftstrom im Vertikalwindtunnel 10 Frischluft zugeführt wird. Die durch die Auslassöffnung 66 entweichende warme oder heiße Luft wird nämlich im Wesentlichen in Strömungsrichtung des Luftstroms ausgestoßen, während die zugeführte Luft durch die stromaufwärts angeordneten Ansaugöffnungen 60 angesaugt wird. Dadurch ist gewährleistet, dass die ausgestoßene Luft nicht gleich wieder angesaugt wird.

Im Betrieb des Vertikalwindtunnels 10 stellt sich bei verschwenkten Leitklappen 62 ein Gleichgewicht zwischen abgeführter und zugeführter Luft ein. Die Menge der ab- bzw. zugegeführten Luft kann durch den Öffnungswinkel der Leitklappen 62 je nach Bedarf eingestellt werden. Grundsätzlich gilt: Je weiter die Leitklappen 62 nach innen verschwenkt werden, desto größer ist der Luftaustausch pro Zeiteinheit und desto schneller kann eine gewünschte Kühlung erreicht werden.

### Bezuaszeichenliste

- 10: Vertikalwindtunnel
- 12: unterer horizontaler Abschnitt
- 14: oberer horizontaler Abschnitt
- 16: erster vertikaler Abschnitt
- 18: zweiter vertikaler Abschnitt
- 20: erster Umlenkbereich
- 22: zweiter Umlenkbereich
- 24: dritter Umlenkbereich
- 26: vierter Umlenkbereich
- 28: Gebläse
- 30: Einlassdiffusor
- 32: Auslassdiffusor
- 34: oberes Diffusorzwischenstück
- 36: unteres Diffusorzwischenstück
- 38: Flugkammer
- 40: Düse
- 42: Flugkammer-Diffusor
- 44: erste Umlenkvorrichtung
- 46: zweite Umlenkvorrichtung
- 48: dritte Umlenkvorrichtung
- 50: vierte Umlenkvorrichtung
- 52: Lufteinlass
- 54: Luftauslass
- 56: Einlassöffnung
- 58: Einlasskanal
- 60: Ansaugöffnung
- 62: Leitklappe
- 64: Auslasskanal
- 66: Auslassöffnung

## Patentansprüche

1. Belüftungsvorrichtung für einen geschlossenen Vertikalwindtunnel (10), in dem ein Luftstrom in einer im Wesentlichen ringförmigen Luftführung rezirkuliert, umfassend
wenigstens einen Lufteinlass (52) mit einer Einlassöffnung (56), durch die dem Luftstrom des Vertikalwindtunnels (10) Luft aus der Umgebung zugeführt werden kann,
einen Luftauslass (54) mit einer Auslassöffnung (66), durch die ein Teil der Luft des Luftstroms in die Umgebung abgeführt werden kann,
eine Einrichtung zur Verengung des effektiven Querschnitts der Luftführung im Bereich der Auslassöffnung (66),
wobei die Einlassöffnung (56) in Strömungsverbindung zu einem Bereich der Luftführung steht, der stromabwärts des verengten Querschnitts der Luftführung liegt,
wobei die Einrichtung zur Verengung des effektiven Querschnitts der Luftführung wenigstens eine Leitklappe (62) umfasst, die zwischen einer ersten Stellung, in der sie die Einlassöffnung (56) ganz oder großteils verschließt, und einer zweiten Stellung, in der sie die Einlassöffnung (56) freigibt oder einen größeren effektiven Einlassquerschnitt bereitstellt, bewegbar ist,
**dadurch gekennzeichnet, dass** die Leitklappe (62) in der zweiten Stellung den effektiven Querschnitt der Luftführung durch die Auslassöffnung (66) verengt.

2. Belüftungsvorrichtung nach Anspruch 1, **dadurch gekennzeichnet, dass** sowohl die Einlassöffnung (56) als auch die Auslassöffnung (66) in einem oberen horizontalen Abschnitt (14) der Luftführung angeordnet sind, insbesondere in einem mittleren Teil des oberen horizontalen Abschnitts (14).

3. Belüftungsvorrichtung nach Anspruch 2, **dadurch gekennzeichnet, dass** die Einlassöffnung (56) in einer vertikalen Seitenwand des oberen horizontalen Abschnitts (14) und die Auslassöffnung in einer horizontalen Wand des oberen horizontalen Abschnitts (14) gebildet ist.

4. Belüftungsvorrichtung nach einem der vorhergehenden Ansprüche, **dadurch gekennzeichnet, dass** der Lufteinlass (52) einen Einlasskanal (58) aufweist, der die Einlassöffnung (56) mit einer in die Umgebung mündenden Ansaugöffnung (60) verbindet, und der Luftauslass (54) einen Auslasskanal (64) aufweist, der die Auslassöffnung (66) mit einer in die Umgebung mündenden Ausstoßöffnung (68) verbindet, wobei der Einlasskanal (58) bezüglich der Strömungsrichtung des Luftstroms in eine andere Richtung als der Auslasskanal (64) verläuft, insbesondere in eine entgegengesetzte Richtung.

5. Belüftungsvorrichtung nach Anspruch 4, **dadurch gekennzeichnet, dass** der Einlasskanal (58) und/oder der Auslasskanal (64) mit Kulissen-Schalldämpfern ausgestattet ist/sind.

6. Belüftungsvorrichtung nach einem der vorhergehenden Ansprüche, **dadurch gekennzeichnet, dass** die Leitklappe (62) an einem stromaufwärtigen Ende der Einlassöffnung (56) angebracht und nach innen schwenkbar ist.

7. Belüftungsvorrichtung nach einem der vorhergehenden Ansprüche, **dadurch gekennzeichnet, dass** sich die Einlassöffnung (56) vertikal ganz oder nahezu über die gesamte Höhe des oberen horizontalen Abschnitts (14) erstreckt und/oder dass sich die Auslassöffnung (66) horizontal ganz oder nahezu über die gesamte Breite des oberen horizontalen Abschnitts (14) erstreckt.

8. Belüftungsvorrichtung nach einem der vorhergehenden Ansprüche, **dadurch gekennzeichnet, dass** zwei Lufteinlässe (52) an gegenüberliegenden Seiten der Luftführung vorgesehen sind, wobei die beiden Lufteinlässe (52) insbesondere spiegelsymmetrisch ausgebildet und/oder im Wesentlichen baugleich sind.

9. Vertikalwindtunnel (10), mit einer im Wesentlichen ringförmigen Luftführung, in der ein Luftstrom rezirkuliert, **gekennzeichnet durch** eine Belüftungsvorrichtung nach einem der vorhergehenden Ansprüche.

## Claims

1. A ventilation device for a closed vertical wind tunnel (10), in which an air flow is recirculated in a substantially annular air duct, comprising
at least one air inlet (52) having an inlet opening (56), through which air from the environment can be supplied to the air flow of the vertical wind tunnel (10),
an air outlet (54) having an outlet opening (66), through which part of the air of the air flow can be discharged into the environment,
a means for constricting the effective cross-section of the air duct in the region of the outlet opening (66),
the inlet opening (56) being in fluid communication with a portion of the air duct that is located downstream of the constricted cross-section of the air duct,
the means for constricting the effective cross-section of the air duct comprising at least one guide flap (62) which is adapted to be moved between a first position, in which it fully or largely closes the inlet opening (56), and a second position, in which it exposes the inlet opening (56) or provides a larger effective inlet cross-section,
**characterized in that** in the second position, the guide flap (62) constricts the effective cross-section of the air duct through the outlet opening (66).

2. The ventilation device according to claim 1, **characterized in that** both the inlet opening (56) and the outlet opening (66) are arranged in an upper horizontal section (14) of the air duct, in particular in a middle part of the upper horizontal section (14).

3. The ventilation device according to claim 2, **characterized in that** the inlet opening (56) is formed in a vertical side wall of the upper horizontal section (14) and the outlet opening is formed in a horizontal wall of the upper horizontal section (14).

4. The ventilation device according to any of the preceding claims, **characterized in that** the air inlet (52) includes an inlet channel (58) connecting the inlet opening (56) with an intake opening (60) opening into the environment, and the air outlet (54) includes an outlet channel (64) connecting the outlet opening (66) with a discharge opening (68) opening into the environment, the inlet channel (58) extending in a different direction than the outlet channel (64) with respect to the flow direction of the air flow, in particular in an opposite direction.

5. The ventilation device according to claim 4, **characterized in that** the inlet channel (58) and/or the outlet channel (64) is/are equipped with splitter silencers.

6. The ventilation device according to any of the preceding claims, **characterized in that** the guide flap (62) is attached to an upstream end of the inlet opening (56) and is adapted to be swiveled inwards.

7. The ventilation device according to any of the preceding claims, **characterized in that** the inlet opening (56) extends vertically completely or almost over the entire height of the upper horizontal section (14) and/or that the outlet opening (66) extends horizontally completely or almost over the entire width of the upper horizontal section (14).

8. The ventilation device according to any of the preceding claims, **characterized in that** two air inlets (52) are provided on opposite sides of the air duct, the two air inlets (52) being in particular formed to be mirror-symmetrical and/or substantially identical in construction.

9. A vertical wind tunnel (10) comprising a substantially annular air duct in which an air flow is recirculated, **characterized by** a ventilation device according to any of the preceding claims.

## Revendications

1. Dispositif d'aération pour une soufflerie verticale fermée (10) dans laquelle un flux d'air recircule dans un conduit d'air sensiblement annulaire, comprenant
au moins une entrée d'air (52) qui présente un orifice d'entrée (56) à travers lequel le flux d'air de la soufflerie verticale (10) peut être alimenté en air provenant de l'environnement,
une sortie d'air (54) qui présente un orifice de sortie (66) à travers lequel une partie de l'air du flux d'air peut être évacuée vers l'environnement,
un moyen de rétrécissement de la section transversale effective du conduit d'air dans la zone de l'orifice de sortie (66),
l'orifice d'entrée (56) étant en communication d'écoulement avec une zone du conduit d'air qui se trouve en aval de la section transversale rétrécie du conduit d'air,
le moyen de rétrécissement de la section transversale effective du conduit d'air comprenant au moins une volet directeur (62) qui est mobile entre une première position dans laquelle il obture une partie ou une majeure partie de l'orifice d'entrée (56), et une deuxième position dans laquelle il libère l'orifice d'entrée (56) ou fournit une section transversale d'entrée effective plus grande,
**caractérisé en ce que** dans la deuxième position, le volet directeur (62) rétrécit la section transversale effective du conduit d'air à travers l'orifice de sortie (66).

2. Dispositif d'aération selon la revendication 1, **caractérisé en ce que** tant l'orifice d'entrée (56) que l'orifice de sortie (66) sont agencés dans un tronçon horizontal supérieur (14) du conduit d'air, en particulier dans un partie médiane du tronçon horizontal supérieur (14).

3. Dispositif d'aération selon la revendication 2, **caractérisé en ce que** l'orifice d'entrée (56) est réalisé dans une paroi latérale verticale du tronçon horizontal supérieur (14) et l'orifice de sortie est réalisé dans une paroi horizontale du tronçon horizontal supérieur (14).

4. Dispositif d'aération selon l'une des revendications précédentes, **caractérisé en ce que** l'entrée d'air (52) présente un canal d'entrée (58) qui relie l'orifice d'entrée (56) à un orifice d'aspiration (60) débouchant dans l'environnement, et **en ce que** la sortie d'air (54) présente un canal de sortie (64) qui relie l'orifice de sortie (66) à un orifice d'échappement (68) débouchant dans l'environnement, le canal d'entrée (58), par rapport au sens d'écoulement du flux d'air, s'étendant dans un autre sens que le canal de sortie (64), en particulier dans un sens opposé.

5. Dispositif d'aération selon la revendication 4, **caractérisé en ce que** le canal d'entrée (58) et/ou le canal de sortie (64) est/sont équipé(s) de silencieux à coulisse.

6. Dispositif d'aération selon l'une des revendications précédentes, **caractérisé en ce que** le volet directeur (62) est agencé à une extrémité amont de l'orifice d'entrée (56) et est apte à pivoter vers l'intérieur.

7. Dispositif d'aération selon l'une des revendications précédentes, **caractérisé en ce que** l'orifice d'entrée (56) s'étend verticalement entièrement ou pratiquement sur toute la hauteur du tronçon horizontal supérieur (14), et/ou **en ce que** l'orifice de sortie (66) s'étend horizontalement entièrement ou pratiquement sur toute la largeur du tronçon horizontal supérieur (14).

8. Dispositif d'aération selon l'une des revendications précédentes, **caractérisé en ce qu'**il est prévu deux entrées d'air (52) sur des côtés opposés du conduit d'air, les deux entrées d'air (52) étant en particulier réalisées à symétrie spéculaire et/ou présentant sensiblement une structure identique.

9. Soufflerie verticale (10), présentant un conduit d'air sensiblement annulaire dans lequel un flux d'air recircule, **caractérisée par** un dispositif d'aération selon l'une des revendications précédentes.
